# EUROPEAN PATENT SPECIFICATION

(11) **EP 0 938 037 B1**
(45) Date of publication and mention of the grant of the patent: **07.01.2004**
(21) Application number: 99109484.8
(22) Date of filing: 07.10.1992
(51) Int. Cl.: G06F 3/033

(54) **An apparatus for manipulating an object displayed on a display device**
Gerät zur Manipulation eines auf einem Bildschirm angezeigten Objektes
Appareil pour la manipulation d'un objet affiché sur une unité d'affichage

(30) Priority: 07.10.1991 JP 25823291
(43) Date of publication of application: 25.08.1999
(62) Divisional of application: 92117111.2
(73) Proprietor: FUJITSU LIMITED, Kawasaki-shi, Kanagawa 211-8588 (JP)
(72) Inventor: Minakuchi, Yu, c/o Fujitsu Ltd., Kawasaki-shi, Kanagawa 211-8588 (JP); Okuyama, Satoshi c/o Fujitsu Ltd., Kawasaki-shi, Kanagawa 211-8588 (JP); Kamata, Hajime c/o Fujitsu Ltd., Kawasaki-shi, Kanagawa 211-8588 (JP); Fukue, Akiko, Suginami-ku, Tokyo 167 (JP)
(74) Representative: Stebbing, Timothy Charles

(56) References cited:
- EP-A- 0 279 652
- EP-A- 0 314 395
- EP-A- 0 448 496

## Description

The present invention relates to an apparatus for manipulating an object displayed on a display device.

As use of computer systems for data processing has become widespread in recent years, more and more users are being required to input data to and converse with data processors such as work stations and personal computers. A vast range of application programs are available for recent data processors and even a complicated application can be processed by using such application programs in combination. However, there is a problem that such data processors are very difficult to handle, especially to manipulate an object displayed on a display device, for those who have little knowledge of computers.

Therefore, an apparatus for manipulating an object displayed on a display device, which is easy to use even for a person who has no special knowledge of computers, is in great demand.

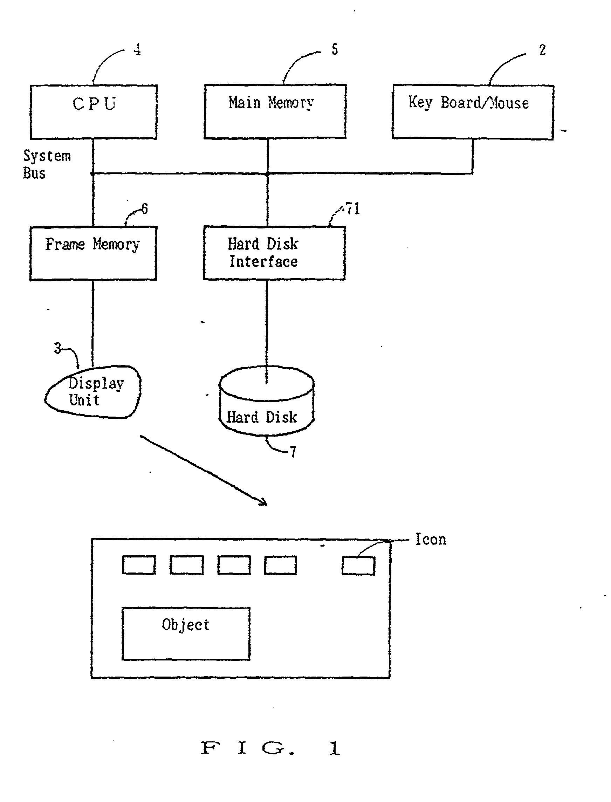

Fig. 1 illustrates a computer system with a conventional user interface.

A computer system with a conventional user interface consists mainly of a central processing unit (CPU) 4, a main memory 5, a keyboard/mouse 2, a frame memory 60 and a hard disk interface 71, which are interconnected via a system bus interface, and also a hard disk 7 and a display unit 3, which are connected to system bus interface via the hard disk interface and the frame memory 6, respectively. The main memory 5 stores a system control program and application programs which handle graphics processing, and provides a work area for use by the programs. The CPU 4 performs display operations under control of the programs. The hard disk 7 stores a data file for graphics to be displayed on the display unit 3. The frame memory 6 stores a frame of picture (or object) data to be displayed on the display unit 3.

To manipulate an object displayed on a display unit 3 in the above system, an operator is required to input a command for manipulating the object by using a keyboard/mouse 2 or to select an icon (a symbolic representation of a computer function) displayed on a display unit 3 by using the keyboard/mouse 2 in order to command a desired function. However, it is troublesome and annoying to use a keyboard/mouse and icons and a person with less knowledge of computers tends to be allergic to even touching a keyboard/mouse.

Therefore, it is a great problem that such data processors are very difficult to handle for those who have less knowledge of computers.

It is therefore desirable to provide an apparatus which can easily manipulate an object displayed on a display unit.

It is also desirable to provide a user interface with which a user can easily manipulate an object displayed on a display unit.

IBM Technical Disclosure Bulletin, vol. 33, No. 1B, June 1990, pages 277-278 discloses an apparatus in which icons resembling three-dimensional push buttons are displayed on the panel (screen). These icons can be "manipulated" by pushing them in or out, the icon display changing in appearance to reflect the amount of depression of the push button. There is only one type of object (icon) and they are displayed at fixed positions on the screen.

EP-A-0 314 395 discloses an apparatus and a controller according to the preamble of each independent claim. A digitising table or a light pen is used as an output means, for outputting information from a user to be used in manipulating an object on a display. The user selects a first image point on a two-dimensional object, and a first point on the display at which the first image point is to be located. Then the user selects a second image point on the object, whose display location on the display is varied by moving a cursor. The effect of this is to distort or rotate the object. However, there is no disclosure of rolling a three-dimensional object.

According to the present invention, there is provided an apparatus for use with a display device to manipulate an object displayed on the display device, the apparatus comprising: output means for outputting information to be used in manipulating an object on the display device; and object manipulation means for manipulating and displaying the object image on a display surface of the display device in response to the output information, comprising: object storing means for storing at least one data file which stores object data for displaying the object; and display control means operable for controlling to display the object on the display device; wherein said output means is a touch panel mounted to the display device and representing a display surface of the display device, which is sensitive to characteristics of a touching contact on the touch panel, the characteristics including at least coordinate positions of the touching contact, for outputting corresponding touch panel information representing the characteristics of the touching contact on the touch panel; said object manipulation means manipulates and displays the object image on the display surface of the display device in response to said touch panel information; said object manipulation means further comprises display information storage means for storing object information including at least an object type which specifies that the object is a three-dimensional rollable object , and display position information indicating the position where the object is displayed on the display device; and said display control means is operable, in accordance with the object type and the touch panel information indicating a movement such that a touching contact touches the object and moves on said touch panel while keeping in contact with the object, to display the object on the display device in a rolling condition.

According to another aspect of the invention, there is provided a controller for controlling the above apparatus, the controller comprising: outputting means for outputting information representing a position on a display surface of the display device; and object manipulation means for manipulating and displaying the object image on the display surface of the display device in response to the information from said outputting means, comprising: object storing means for storing at least one data file which stores object data for displaying the object; and display control means operable for controlling to display the object on the display device; wherein said outputting means outputs touch panel information representing a position of the touching contact; said object manipulation means manipulates and displays the object on the display device in response to said touch panel information; said object manipulation means further comprises display information storage means for storing object information including at least an object type which specifies that the object is a three-dimensional rollable object, and display position information indicating the position where the object is displayed on the display device; and said display control means is operable, in accordance with the object type and the touch panel information indicating a movement such that a touching contact touches the object and moves on said touch panel while keeping in contact with the object, to display the object on the display device in a rolling condition.

Thus, the present invention can provide a touch-sensitive panel (e.g. touch screen), means storing a plurality of data files, display information storage means and display control means, which can be used with a display device of a computer system or workstation.

Reference is made, by way of example, to the accompanying drawings, in which Figure 10 relates to a roll manipulation in accordance with the present invention, and Figures 5 to 9 and 11 show other types of manipulation by way of background explanation. In the drawings:-
Fig. 1 illustrates a computer system with a conventional user interface;
Fig. 2 is a configuration diagram of a touch-screen-equipped workstation, to which the present invention may be applied;
Fig. 3 is a schematic diagram illustrating the principle of the present invention;
Fig. 4(a) shows a display information table;
Fig. 4(b) shows touch screen information;
Fig. 5 is a flowchart illustrating a pick manipulation;
Fig. 6 is a diagram illustrating a pick manipulation;
Fig. 7 is a diagram illustrating a scroll manipulation;
Fig. 8 is a diagram illustrating a push manipulation;
Fig. 9 is a diagram illustrating a flip manipulation;
Fig. 10 is a diagram illustrating a roll manipulation;
Fig. 11 is a diagram illustrating a distort-restore manipulation.

Throughout the above-mentioned drawings, identical reference numerals are used to designate the same or similar component parts.

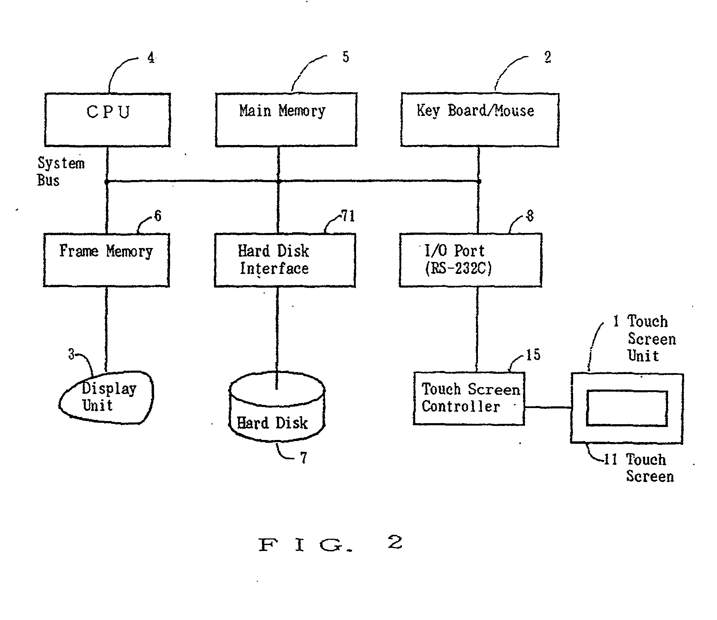

Fig. 2 is a configuration diagram of a touch screen-equipped workstation for implementing the present invention.

In addition to the conventional system shown in Fig. 1, the system includes an input-output (abbreviated to I/O) port 8, a touch screen controller 15 and a touch screen unit 1 with a touch screen 11. The touch screen controller 15, connected to the input-output port 8 through an RS-232C interface, controls the touch screen unit 1. The touch screen unit 1, which is sensitive to a position or positions (X-Y co-ordinates) where it is touched, and preferably also to a pressure applied to it, acts as a user interface that allows a user to send signals to the CPU by touching an area thereon with a body, such as a finger or a pencil.

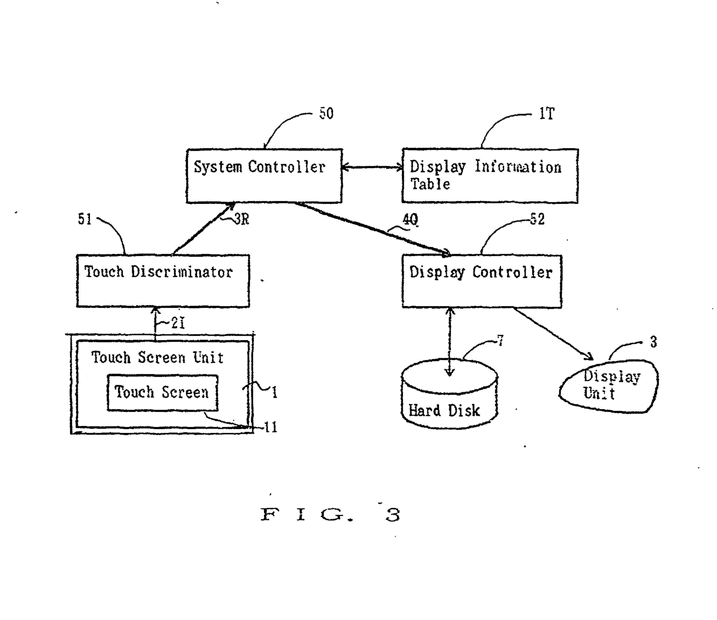

Fig. 3 is a schematic diagram illustrating the principle of the present invention.

For easy understanding of the principle, the input-output port 8, touch screen controller 15 and touch screen unit 1 shown in Fig. 2 are represented by the touch screen unit 1; and the frame memory 6 and display unit 3 are represented by the display unit 3. A system controller 50, touch discriminator 51 display controller 52 and display information table 1T, which are stored in the main memory 5, control display operations featured by the present invention.

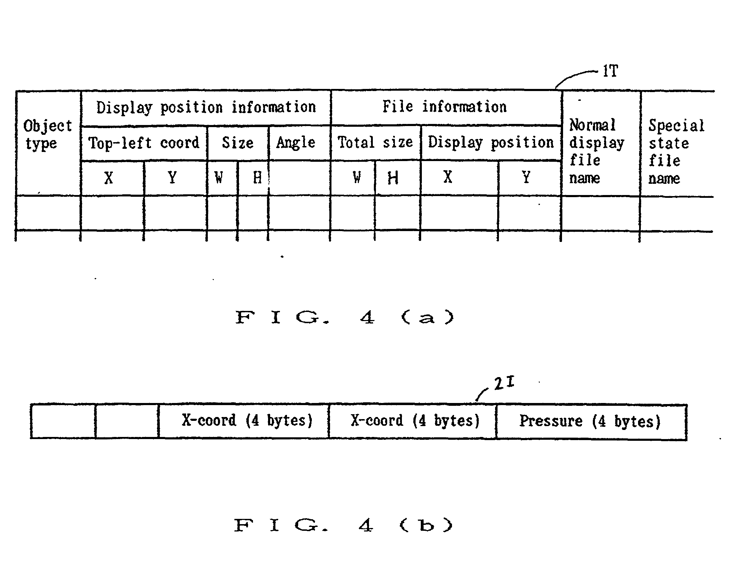

Fig. 4(a) shows a display information table. Fig. 4(b) shows touch screen information.

A display information table 1T, which is provided in the main memory 5, corresponding to objects, includes an object type, display position information, file information, normal-display file name and special-state file name. The object type defines the type including the shape, properties, circumstances, etc., of the object. The display position information defines the size of the object (width, height), and the position (top-left coordinates X,Y) and the angle at which the object is displayed on the display unit 1.

The file information stored in the display data file, which is used for an object which is so large in size that it requires scrolling to view the whole object, defines the size (width W, height H) of the whole object relative to the display screen size, and also the position (top-left co-ordinates X, Y) of the object portion being displayed on the display device, relative to the whole object data. The normal display file name specifies a normal display file where object data for displaying a normal-state of the object is stored. The special-state file name specifies a special-state file where object data for displaying a special-state (e.g. turn-over indication of display color, used for displaying intermediate process of manipulating the object) of the object is stored.

Touch-screen information 21, which is sent from the touch screen unit 1, includes a touch position (X-Y coordinates) where the touch screen 11 is touched and a pressure applied thereon.

In the following description, various types of manipulation are explained, in which item (9) corresponds to the present invention.
(1) The touch discriminator 51, based on the touch screen information 21 from the touch screen unit 1, discriminates the type of a touch an operator's finger has on the touch screen 11, that is, a touch type including, i.e., a "continuous touch start" and "continuous touch end" explained later. The touch discriminator 51 sends to the system controller 50, the result of the discrimination as a touch report 3R, which includes a touch type and touch coordinates.

Based on the touch report 3R from the touch discriminator 51 and the display information table 1T, the system controller 50 determines the type of a manipulation conducted by an operator and, according to the determination, updates the display information table 1T. Then, the system controller 50 sends to the display controller 52, a display update request 4Q along with "display update data" which includes contents of the display information table 1T updated(including display position information, file information, normal display file name and special-state file name.

On receipt of the display update request 4Q from the system controller 50, the display controller 52 reads display file data (including object data) specified by the file name from the hard disk 7 and stores the data into the main memory 5. The display controller 52 then updates the object data in accordance with the display update data from the system controller 50 and loads the thus-updated object data into the frame memory 6 to display the object, as manipulated by-the operator on the touch screen unit 1.

Thus, the present invention determines a manipulation to be conducted on the object displayed, based on the touch screen information 21 which results from an operator's touching the touch screen 11 and the display information table 1T which defines the object's shape, physical properties, display position, etc. It then displays the object according to the manipulation determined, as intended by the operator.

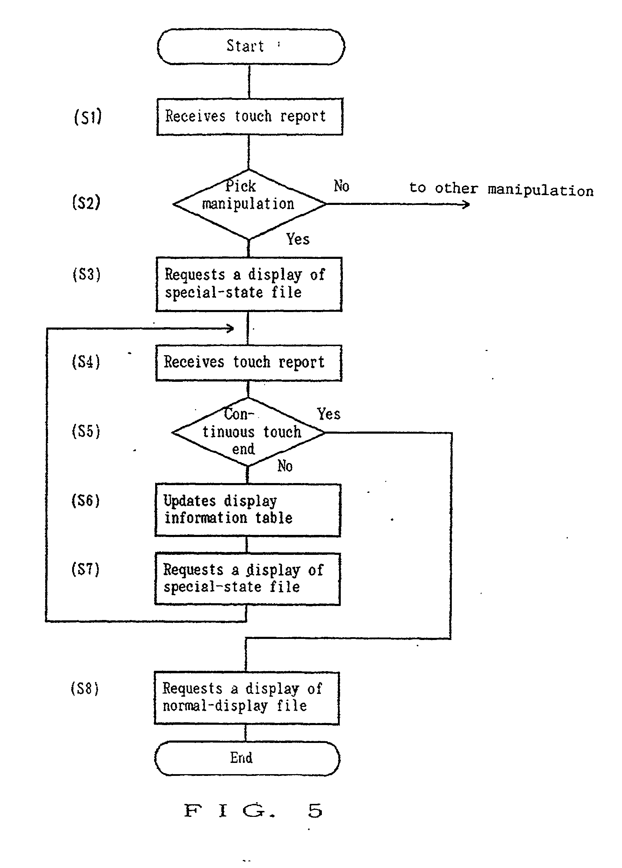

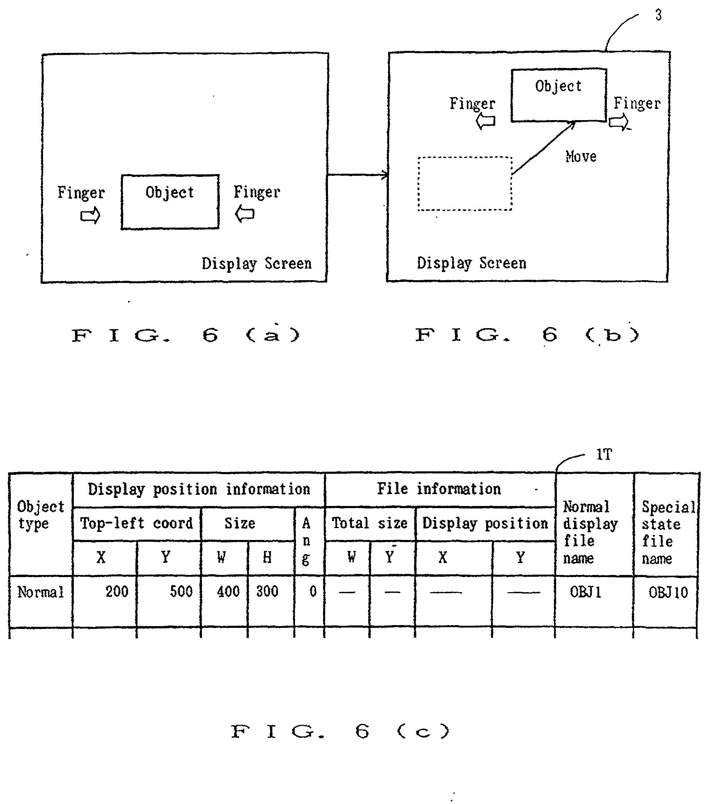

### (2) Pick manipulation (see Figs. 5 and 6.)

A pick manipulation is conducted in such a way as an object is picked up at a position on the display surface of the display unit 3 and placed at another position.

Fig. 5 is a flowchart illustrating a pick manipulation. Fig. 6 is a diagram illustrating a pick manipulation.

A pick manipulation is carried out according to the following steps (S1-S8) in Fig. 5:
(S1) The system controller 50 receives a touch report 3R from the touch discriminator 51.
(S2) The system controller 50 checks the touch report 3R to see whether the object-finger relation is a pick manipulation as shown in Fig. 6(a), based on the touch report 3R and contents of the display information table 1T shown in Fig. 6(c). When the relation is not a pick manipulation, the system controller 50 checks the touch report 3R for other manipulation.
(S3) When the relation is a pick manipulation, the system controller 50 sends a display update request 4Q including "display update data", commanding that the special-state file (turn-over indication) be displayed at the position specified by the display information table 1T.
(S4) The system controller 50 receives a touch report 3R.
(S5) The system controller 50 determines whether the touch report 3R includes a "continuous touch end", which occurs when the finger-object relation is as in Fig. 6(b). When a "continuous touch end" is reported, the operation goes to step (S8).
(S6) Otherwise, the system controller 50 updates the display position information "coordinates (X, Y)" of the display information table 1T so that the object is positioned between the two fingers.
(S7) The system controller 50 sends display update request 4Q to the display controller 52, commanding that the special-state file be displayed according to the display information table 1T updated, and returns to step (S4).
(S8) When "continuous touch end" is reported by a touch report 3R, the system controller 50 sends a display update request 4Q to the display controller 52, commanding that the normal-display file be displayed at the position specified in the display information table 1T.

Following manipulations are carried out in the same way as described in the above flowchart of the pick manipulation.

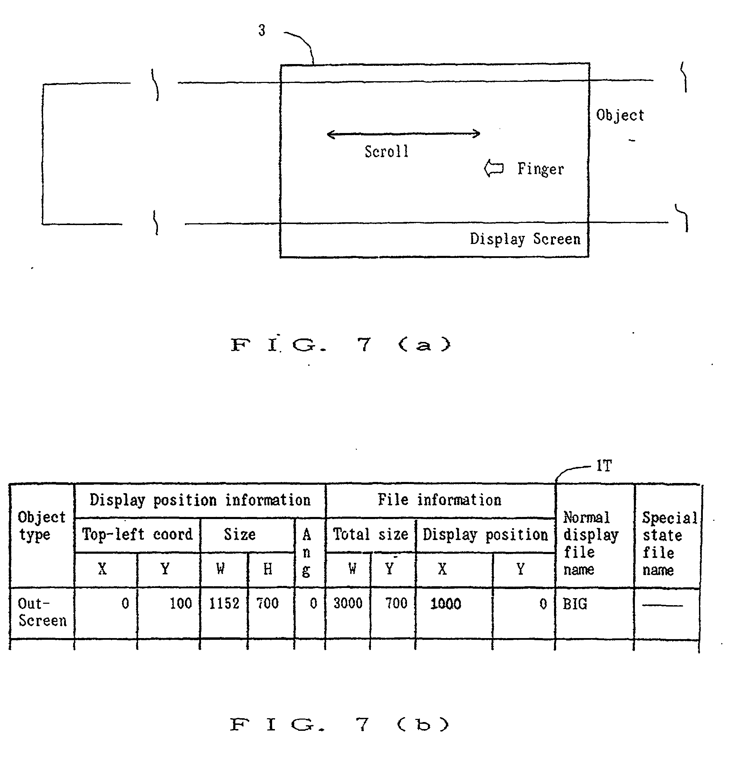

### (3) Scroll manipulation (see Fig. 7.)

A scroll manipulation is conducted in such a way as an object extending outside of the display surface of the display unit 3 is moved into and out of the display surface.

Fig. 7 is a diagram illustrating a scroll manipulation.

On determining that the finger moves while touching the touch screen 11 based on the touch screen information 21 from the touch screen unit 1, the discriminator 51 sends to the system controller 50, a touch report 3R including "continuous touch start" for the touch type and also "coordinates (800, 800)" for the touch position. As another touch screen information 21 comes in, the discriminator 51 sends a touch report 3R including "continuous touch in progress" and coordinates (780, 800). When the touch screen information 21 is not sent for more than 100 milliseconds, for example, the discriminator 51 sends a touch report 3R including "continuous touch end" and coordinates (700, 800) to the system controller 50.

when a "continuous touch start" is reported and the "object type" is defined as "out-screen" in the display information table 1T, the system controller 50 recognizes the object as a large one extending beyond the display screen. Then, the system controller 50 determines the speed at which the finger has moved from right to left, for example, based on a change in the X-coordinate in the touch report 3R.

Depending on whether the finger has moved at a speed of more (high-speed) or less (normal-speed) than for example 20 dots (pixels) e.g. since the last check, the display screen is scrolled first at an interval of 100 or 500 milliseconds, respectively. Then, the interval, at which the display update request 4Q is sent to the display controller 52, is increased by a factor 1.5 at each touch report 3R and, when the interval reaches 2 seconds, the scrolling is stopped.

Practically, the screen is so controlled that it starts scrolling at an above-mentioned speed after a finger has moved a distance of 4 dots or more. That is, on recognizing that the finger has moved for that distance, the system controller 50 updates the file information "display position X" of the display information table 1T so that the object is displayed to the left by 10 dots, for example. Then, it sends to the display controller 52, a display update request including display position information, file information and normal display file name from the display information table 1T updated.

The display controller 52 reads from the hard disk a display file specified by the normal display file name and loads it in the main memory 5. The display controller 52 then transfers only the part of the display file specified by the file information "display position X" of the display information table 1T, from the main memory 5 to the appropriate location of the frame memory 6.

In the same way, the system controller 50 sends a display update request 4Q to the display controller 52 every time it receives a touch report 3R .

When another "continuous touch" is reported before the scroll currently in progress comes to a stop, a new scroll can start from this point and at the first speed described above.

### (4) Scroll-stop manipulation (see Fig. 7.)

Fig. 7 is a diagram illustrating a scroll manipulation.

When a touch position given by a touch report 3R is the same as or approximately 5 dots apart from the position of the scrolling currently in progress, the system controller 50 doubles the frequency with which display update requests 4Q are sent to the display controller 52, in order to put an end to the scrolling.

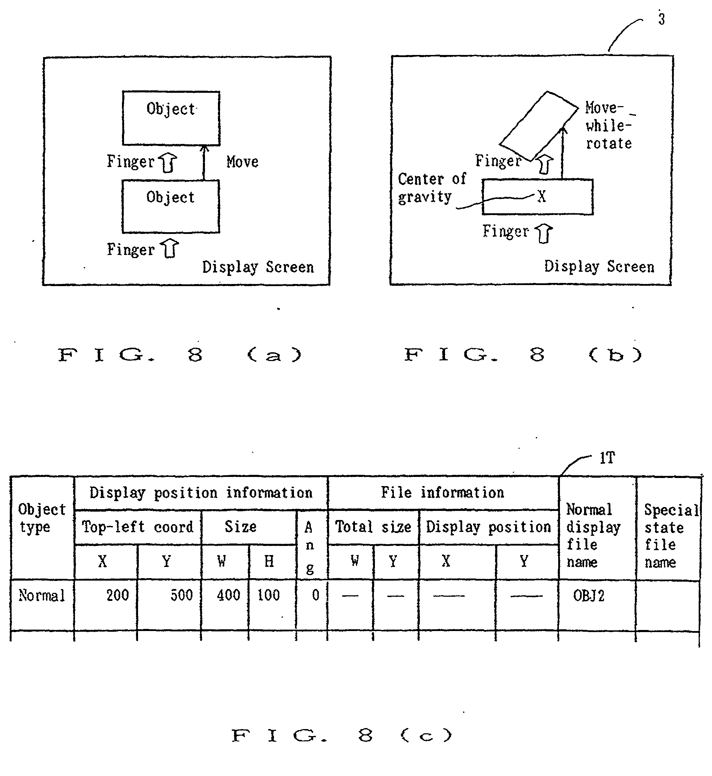

### (5) Push manipulation (see Fig. 8.)

A push manipulation is conducted in such a way as an object is pushed on the display surface of the display unit 3.

Fig. 8 is a diagram illustrating a push manipulation.

The system controller 50 determines the type of a manipulation, based on the touch report 3R and contents of the display information table 1T shown in Fig. 8(c). When the manipulation is a push manipulation as shown in Fig. 8(a), the system controller 50 sends to the display controller 52, a display update request 4Q including display position information, file information and normal display file name so that the object is displayed close to the finger position reported by the touch report 3R. The above display operation is repeated until a "continuous touch end" is reported by a touch report 3R.

### (6) Push-while-rotate manipulation (see Fig. 8.)

A push-while-rotate manipulation is conducted in such a way as an object is pushed at a position off its center (or the center of gravity) and it moves rotating on the display surface of the display unit 3.

Fig. 8 is a diagram illustrating a push manipulation.

The system controller 50 determines the type of a manipulation, based on the touch report 3R and contents of the display information table 1T shown in Fig. 8(c). When the manipulation is a push-while-rotate manipulation as shown in Fig. 8(b), the system controller 50 sends to the display controller 52, display update requests 4Q with the angle of rotation increasing by 2 degrees, i.e., while increasing the angle in the display information table 1T shown in Fig. 8(c).

The display controller 52 reads the display file from the hard disk and loads the data in the main memory 5, rotates the object by the angle and with the left-top coordinates (X, Y) as a rotational center, as specified by the display update request 4Q, and transfers the data with the object rotated, from the main memory 5 to the frame memory 6.

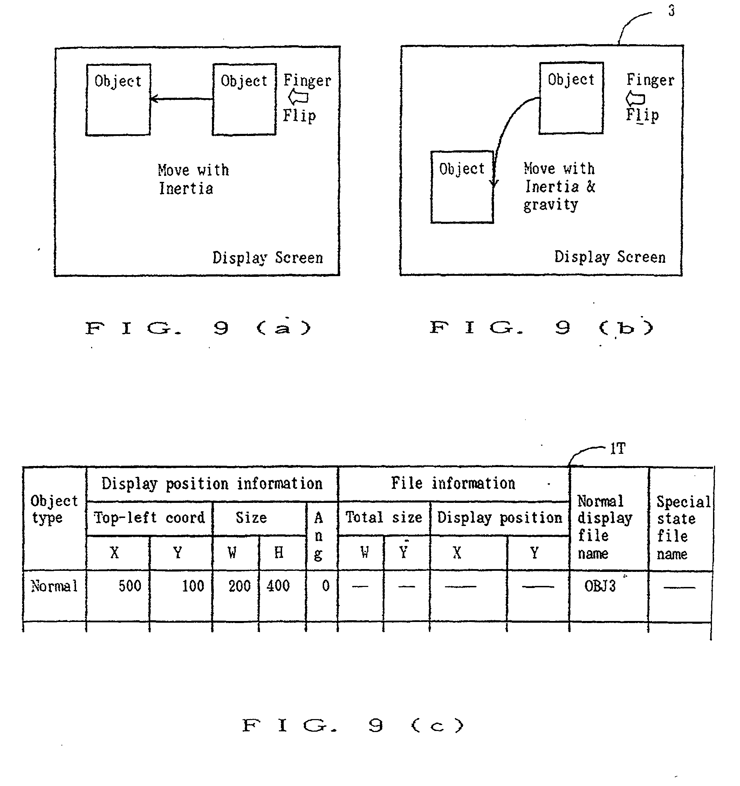

### (7) Flip manipulation (see Fig. 9.)

A flip manipulation is conducted in such a way as a finger flips an object or touches the object from a remote position at a high speed on the display surface of the display unit 3.

Fig. 9 is a diagram illustrating a flip manipulation.

When a touch report 3R is input from the touch discriminator 51, the system controller 50 descriminates the type of a manipulation based on the touch report 3R and contents of the display information table 1T shown in Fig. 9 (c). When the manipulation is a flip manipulation as shown in Fig. 9 (a), the system controller 50 obtains a finger speed based on the touch report 3R and also an object speed (i.e., the interval at which display update requests 4Q are sent to the display controller 52), in the same way as described in item (3). The system controller 50 sends display update requests 4Q to the display controller 52, while updating the display position information left-top coordinates (X, Y) of the display information table 1T so that the object moves in the direction the finger moves. The system controller 50 stops moving the object when the above-mentioned interval reaches 2 seconds.

### (8) Flip-under-gravity manipulation (see Fig. 9.)

A flip-under-gravity manipulation is conducted in such a way as an object which is subjected to a gravity is flipped by a finger on the display surface of the display unit 3.

Fig. 9 is a diagram illustrating a flip manipulation.

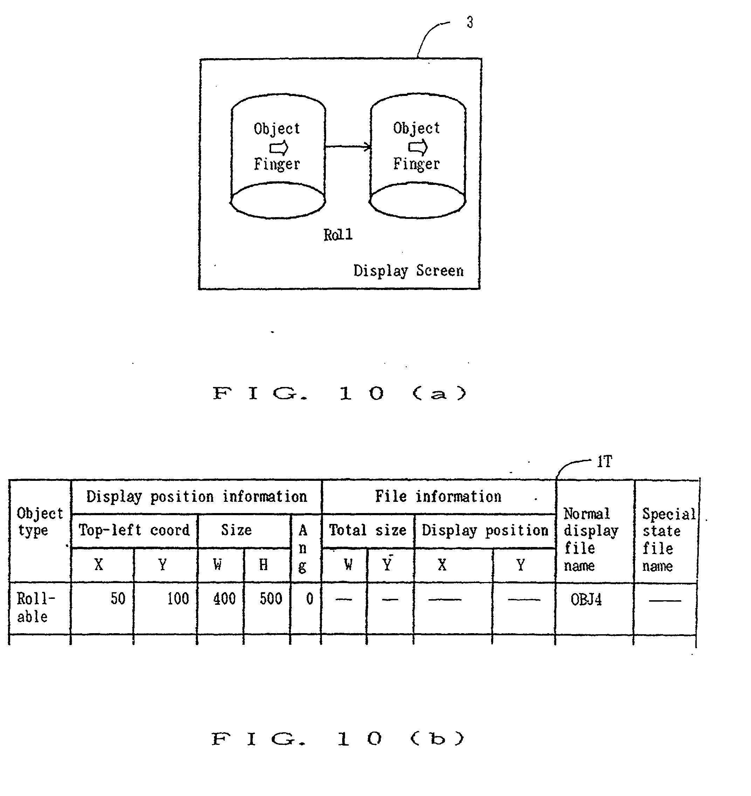

When the finger manipulation is a flip as in the-above item (8) and the display information table 1T defines the object type as "gravity" meaning that the object is subjected to gravity, for example, the object moves under the combined influences of inertia and simulated gravity, i.e. "falls" as shown in Fig. 9(b). Therefore, the system controller 50 sends display update requests 4Q to the display controller 52, while updating the display position information left-top coordinates (X, Y) by adding a value to the Y-coordinate of of the display information table 1T. The value is represented by 2 to the Nth power (N: the number of display update requests 4Q sent). In this case, too, the system controller 50 stops moving the object when the above-mentioned interval reaches 2 seconds. The resulting trajectory may be a parabola.
(9) Roll manipulation (see Fig. 10.)

A roll manipulation is conducted in such a way as a rollable object is rolled by a finger on the display surface of the display unit 3.

Fig. 10 is a diagram illustrating a roll manipulation.

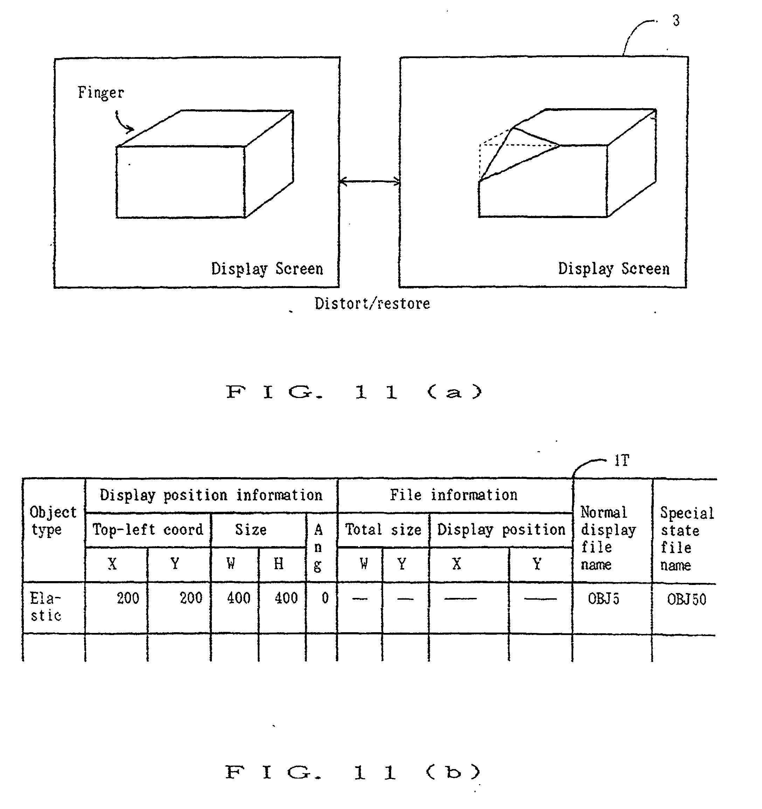

When a touch report 3R is input from the touch discriminator 51 and the display information table 1T defines the object type as "rollable" meaning that the object is constructed such that it rolls when flipped like a globe or a cylinder, as shown in Fig. 10(a), the system controller 50 sends display update requests 4Q to the display controller 52, while updating the display position information left-top coordinates (X, Y) of the display information table 1T so that the object moves a distance 10 per. cent behind the distance and in the direction the finger moves.
(10) Distort-restore manipulation (see Fig. 11.)

A distort-restore manipulation is conducted in such a way as an"elastic"object is pressed by a finger on the display surface of the display unit 3, thereby deforming the displayed object.

Fig. 11 is a diagram illustrating a distort-restore manipulation.

When a touch report 3R is input from the touch discriminator 51 and the display information table 1T defines the object type as "elastic" meaning that the object can be distorted and restored according to a pressure applied thereon by a finger, as shown in Fig. 11(a), the system controller 50 calculates an amount of distortion of the object based on the pressure reported by the touch report 3R. It stores in the display information table 1T, a special-state file name specifying one of special-state files (for displaying a distorted state of the object in turn-over indication) corresponding to the amount of distortion calculated. Then, the system controller 50 sends a display update request 4Q to the display controller 52, commanding that the special-state file be displayed at the current display position. When the above operation is repeated as necessary and a "continuous touch end" is reported by a touch report 3R, the system controller 50 sends a display update request 4Q (with a normal display file name specified) to the display controller 52, commanding that a normal display file (normal indication) be displayed at the current display position. A plurality of special-state files are provided in the hard disk 7, corresponding to the amount of distortion of the object, which results from a pressure applied on the touch screen 11.

As is apparent by the above description, the present invention regards a display screen as a virtual space. It defines conditions and physical properties of an object (e.g., weight, hardness, frictional resistance, center of gravity) in the display information table 1T. It also receives touch screen information 21 indicating a finger-touched position and pressure is input from a touch screen unit 1. Based on the touch screen information 21 and the display information table 1T, the present invention determines a manipulation to be conducted on the object displayed, e.g. scrolling, picking (up), pushing, rolling, distorting the object on the display surface of the display unit 3. Thus, the present invention allows a user to manipulate an object displayed on a display device quite easily, even when the user has little knowledge of computers.

## Claims

1. An apparatus for use with a display device (3) to manipulate an object displayed on the display device, the apparatus comprising:
output means (11) for outputting information to be used in manipulating an object on the display device; and
object manipulation means (7,50,52,1T) for manipulating and displaying the object image on a display surface of the display device in response to the output information, comprising:
object storing means (7) for storing at least one data file which stores object data for displaying the object; and
display control means (52) operable for controlling to display the object on the display device;
wherein
said output means is a touch panel (11) mounted to the display device (3) and representing a display surface of the display device, which is sensitive to characteristics of a touching contact on the touch panel, the characteristics including at least coordinate positions of the touching contact, for outputting corresponding touch panel information (3R) representing the characteristics of the touching contact on the touch panel (11);
said object manipulation means (7,50,52,1T) manipulates and displays the object image on the display surface of the display device (3) in response to said touch panel information (3R);
said object manipulation means (7,50,52,1T) further comprises display information storage means (1T) for storing object information including at least an object type which specifies that the object is a three-dimensional rollable object, and display position information indicating the position where the object is displayed on the display device (3); and
said display control means (52) is operable, in accordance with the object type and the touch panel information (3R) indicating a movement such that a touching contact touches the object and moves on said touch panel (11) while keeping in contact with the object, to display the object on the display device (3) in a rolling condition.

2. A controller for controlling an apparatus according to claim 1, the controller comprising:
outputting means (51) for outputting information representing a position on a display surface of the display device (3); and
object manipulation means (7,50,52,1T) for manipulating and displaying the object image on the display surface of the display device in response to the information from said outputting means (51), comprising:
object storing means (7) for storing at least one data file which stores object data for displaying the object; and
display control means (52) operable for controlling to display the object on the display device (3);
wherein
said outputting means (51) outputs touch panel information (3R) representing a position of the touching contact;
said object manipulation means (7,50,52,1T) manipulates and displays the object on the display device (3) in response to said touch panel information (3R) ;
said object manipulation means (7,50,52,1T) further comprises display information storage means (1T) for storing object information including at least an object type which specifies that the object is a three-dimensional rollable object, and display position information indicating the position where the object is displayed on the display device (3); and
said display control means (52) is operable, in accordance with the object type and the touch panel information (3R) indicating a movement such that a touching contact touches the object and moves on said touch panel (11) while keeping in contact with the object, to display the object on the display device (3) in a rolling condition.

## Patentansprüche

1. Vorrichtung zur Verwendung mit einer Anzeigeeinrichtung (3), um ein Objekt zu manipulieren, das an der Anzeigeeinrichtung angezeigt wird, welche Vorrichtung umfaßt:
ein Ausgabemittel (11) zum Ausgeben von Informationen, die beim Manipulieren eines Objektes an der Anzeigeeinrichtung zu verwenden sind; und
ein Objektmanipulationsmittel (7, 50, 52, 1T), zum Manipulieren und Anzeigen des Objektbildes auf einer Anzeigeoberfläche der Anzeigeeinrichtung als Reaktion auf die ausgegebenen Informationen, mit:
einem Objektspeichermittel (7) zum Speichern wenigstens einer Datendatei, die Objektdaten zum Anzeigen des Objektes speichert; und
einem Anzeigesteuermittel (52), das zum Steuern betriebsfähig ist, um das Objekt an der Anzeigeeinrichtung anzuzeigen;
bei der das Ausgabemittel ein Berührungsfeld (11) ist, das an die Anzeigeeinrichtung (3) montiert ist und eine Anzeigeoberfläche der Anzeigeeinrichtung darstellt, die gegenüber Charakteristiken eines Berührungskontaktes auf dem Berührungsfeld empfindlich ist, welche Charakteristiken wenigstens Koordinatenpositionen des Berührungskontaktes enthalten, zum Ausgeben von entsprechenden Berührungsfeldinformationen (3R), welche die Charakteristiken des Berührungskontaktes auf dem Berührungsfeld (11) darstellen;
das Objektmanipulationsmittel (7, 50, 52, 1T) das Objektbild auf der Anzeigeoberfläche der Anzeigeeinrichtung (3) als Reaktion auf die Berührungsfeldinformationen (3R) manipuliert und anzeigt;
das Objektmanipulationsmittel (7, 50, 52, 1T) ferner ein Anzeigeinformationsspeichermittel (1T) umfaßt, zum Speichern von Objektinformationen, die wenigstens einen Objekttyp enthalten, der spezifiziert, daß das Objekt ein dreidimensionales rollbares Objekt ist, und von Anzeigepositionsinformationen, welche die Position angeben, wo das Objekt an der Anzeigeeinrichtung (3) angezeigt wird; und
das Anzeigesteuermittel (52) gemäß dem Objekttyp und den Berührungsfeldinformationen (3R) betriebsfähig ist, die solch eine Bewegung angeben, daß ein Berührungskontakt das Objekt berührt und auf dem Berührungsfeld (11) bewegt, während der Kontakt mit dem Objekt beibehalten wird, um das Objekt an der Anzeigeeinrichtung (3) in einem rollenden zustand anzuzeigen.

2. Controller zum Steuern einer Vorrichtung nach Anspruch 1, welcher Controller umfaßt:
ein Ausgabemittel (51) zum Ausgeben von Informationen, die eine Position auf einer Anzeigeoberfläche der Anzeigeeinrichtung (3) darstellen; und
ein Objektmanipulationsmittel (7, 50, 52, 1T), zum Manipulieren und Anzeigen des Objektbildes auf der Anzeigeoberfläche der Anzeigeeinrichtung als Reaktion auf die Informationen von dem Ausgabemittel (51), mit:
einem Objektspeichermittel (7) zum Speichern wenigstens einer Datendatei, die Objektdaten zum Anzeigen des Objektes speichert; und
einem Anzeigesteuermittel (52), das zum Steuern betriebsfähig ist, um das Objekt an der Anzeigeeinrichtung (3) anzuzeigen;
bei dem das Ausgabemittel (51) Berührungsfeldinformationen (3R) ausgibt, die eine Position des Berührungskontaktes darstellen;
das Objektmanipulationsmittel (7, 50, 52, 1T) das Objekt an der Anzeigeeinrichtung (3) als Reaktion auf die Berührungsfeldinformationen (3R) manipuliert und anzeigt;
das Objektmanipulationsmittel (7, 50, 52, 1T) ferner ein Anzeigeinformationsspeichermittel (1T) umfaßt, zum Speichern von Objektinformationen, die wenigstens einen Objekttyp enthalten, der spezifiziert, daß das Objekt ein dreidimensionales rollbares Objekt ist, und von Anzeigepositionsinformationen, welche die Position angeben, wo das Objekt an der Anzeigeeinrichtung (3) angezeigt wird; und
das Anzeigesteuermittel (52) gemäß dem Objekttyp und den Berührungsfeldinformationen (3R) betriebsfähig ist, die solch eine Bewegung angeben, daß ein Berührungskontakt das Objekt berührt und auf dem Berührungsfeld (11) bewegt, während der Kontakt mit dem Objekt beibehalten wird, um das Objekt an der Anzeigeeinrichtung (3) in einem rollenden Zustand anzuzeigen.

## Revendications

1. Appareil pour une utilisation avec un dispositif d'affichage (3) afin de manipuler un objet affiché sur le dispositif d'affichage, l'appareil comprenant :
un moyen de sortie (11) pour émettre en sortie une information destinée à être utilisée au niveau de la manipulation d'un objet sur le dispositif d'affichage ; et
un moyen de manipulation d'objet (7, 50, 52, 1T) pour manipuler et afficher l'image d'objet sur une surface d'affichage du dispositif d'affichage en réponse à l'information de sortie, comprenant :
un moyen de stockage d'objet (7) pour stocker au moins un fichier de données qui stocke des données d'objet pour afficher l'objet ; et
un moyen de commande d'affichage (52) pouvant fonctionner pour commander l'affichage de l'objet sur le dispositif d'affichage,
dans lequel :
ledit moyen de sortie est un panneau ou écran tactile (11) qui est monté sur le dispositif d'affichage (3) et qui représente une surface d'affichage du dispositif d'affichage, qui est sensible à des caractéristiques d'un contact par effleurement sur l'écran tactile, les caractéristiques incluant au moins des positions de coordonnées du contact par effleurement, pour émettre en sortie une information d'écran tactile correspondante (3R) représentant les caractéristiques du contact par effleurement sur l'écran tactile (11) ;
ledit moyen de manipulation d'objet (7, 50, 52, 1T) manipule et affiche l'image d'objet sur la surface d'affichage du dispositif d'affichage (3) en réponse à ladite information d'écran tactile (3R) ;
ledit moyen de manipulation d'objet (7, 50, 52, 1T) comprend en outre un moyen de stockage d'information d'affichage (1T) pour stocker une information d'objet incluant au moins un type d'objet qui spécifie que l'objet est un objet qui peut être roulé en trois dimensions, et une information de position d'affichage indiquant la position au niveau de laquelle l'objet est affiché sur le dispositif d'affichage (3) ; et
ledit moyen de commande d'affichage (52) peut être actionné, conformément au type d'objet et à l'information d'écran tactile (3R) indiquant un déplacement qui est tel qu'un contact par effleurement touche l'objet et se déplace sur ledit écran tactile (11) tout en gardant un contact avec l'objet, pour afficher l'objet sur le dispositif d'affichage (3) dans une condition de roulement.

2. Contrôleur pour commander un appareil selon la revendication 1, le contrôleur comprenant :
un moyen d'émission en sortie (51) pour émettre en sortie une information représentant une position sur une surface d'affichage du dispositif d'affichage (3) ; et
un moyen de manipulation d'objet (7, 50, 52, 1T) pour manipuler et afficher l'image d'objet sur la surface d'affichage du dispositif d'affichage en réponse à l'information en provenance dudit moyen d'émission en sortie (51 ), comprenant :
un moyen de stockage d'objet (7) pour stocker au moins un fichier de données qui stocke des données d'objet pour afficher l'objet ; et
un moyen de commande d'affichage (52) pouvant fonctionner pour commander l'affichage de l'objet sur le dispositif d'affichage (3),
dans lequel :
ledit moyen d'émission en sortie (51) émet en sortie une information d'écran tactile (3R) qui représente une position du contact par effleurement ;
ledit moyen de manipulation d'objet (7, 50, 52, 1T) manipule et affiche l'objet sur le dispositif d'affichage (3) en réponse à ladite information d'écran tactile (3R) ;
ledit moyen de manipulation d'objet (7, 50, 52, 1T) comprend en outre un moyen de stockage d'information d'affichage (1T) pour stocker une information d'objet incluant au moins un type d'objet qui spécifie que l'objet est un objet qui peut être roulé en trois dimensions, et une information de position d'affichage qui indique la position au niveau de laquelle l'objet est affiché sur le dispositif d'affichage (3) ; et
ledit moyen de commande d'affichage (52) peut fonctionner, conformément au type d'objet et à l'information d'écran tactile (3R) indiquant un déplacement qui est tel qu'un contact par effleurement touche l'objet et se déplace sur ledit écran tactile (11) tout en gardant un contact avec l'objet, pour afficher l'objet sur le dispositif d'affichage (3) dans une condition de roulement.
